# EUROPÄISCHE PATENTANMELDUNG

(11) **EP 2 342 966 A1**
(43) Veröffentlichungstag der Anmeldung: **13.07.2011**
(21) Anmeldenummer: 11401005.1
(22) Anmeldetag: 07.01.2011
(51) Int. Cl.: A01C 7/06, A01C 7/10

(54) **Kombinierte Verteilmaschine**

(30) Priorität: 12.01.2010 DE 102010000046; 28.05.2010 DE 102010017127
(71) Anmelder: Amazonen-Werke H. Dreyer GmbH & Co. KG, 49205 Hasbergen (DE)
(72) Erfinder: Scheufler, Bernd, 49205, Hasbergen (DE); Wilken, Martin, 26409, Wittmund (DE); Mertens, Daniel, 26123, Oldenburg (DE)

(57) **Zusammenfassung**

Kombinierte Verteilmaschine, bestehend aus einer Einzelkornsämaschine (1) mit Saatkornvereinzelungsvorrichtungen (5) und Säscharen (6) und einer Düngerverteilmaschine (2) mit Düngerdosiereinrichtungen (9) und zugeordneten Düngerablegeeinrichtungen (10), wobei die von den Saatkornvereinzelungseinrichtungen (5) vereinzelten Samenkörner in zumindest annähernd gleichen Abständen mittels der Säschare (6) in den Boden abgelegbar sind und der von den Düngerdosiereinrichtungen (9) dosierte Dünger über die Düngerablegeeinrichtungen (10) zumindest in der Nähe der im Boden abgelegten Samenkörner im Boden platzierbar ist, dadurch gekennzeichnet, dass die Düngerdosiereinrichtungen (9) den dosierten Dünger derart den Düngerablegeeinrichtungen (10) zuführen, dass die Düngergaben für jedes Samenkorn in portionierter Weise in Abständen zueinander jedem Samenkorn in zugeordneter Weise im Boden ablegbar sind.

## Beschreibung

Die Erfindung betrifft eine kombinierte Verteilmaschine gemäß des Oberbegriffes des Patentanspruches 1.

Eine derartige kombinierte Verteilmaschine ist beispielsweise durch die EP 0 327 896 B2 bekannt. Diese kombinierte Verteilmaschine besteht aus einer Einzelkornsämaschine und einer Düngerverteilmaschine. Die Säschare und die als Düngerschare ausgebildeten Düngerablageeinrichtungen, die jeweils einer Saatreihe als Paar zugeordnet sind, sind quer zur Fahrtrichtung gesehen um einen kleinen Abstand versetzt zueinander angeordnet, damit das Saatgut seitlich neben dem Saatkorn abgelegt wird. Derartige Verteilmaschinen kommen bisher bei der Ausbringung beispielsweise von Mais zum Einsatz, der in Reihenabständen von etwa 75 cm zueinander abgelegt wird. Hierbei ergibt sich eine relativ dichter Ablageabstand der Saatkörner in einer Reihe zueinander. Bei neueren Saatverfahren besteht jedoch das Bestreben, die Saatkörner gleichmäßiger verteilt im dem Boden abzulegen, um jedem Saatkorn eine größere Bodenfläche in gleichmäßiger Weise zur Verfügung zu stellen. Hierbei geht man dazu über, dass beispielsweise beim Ausbringen von Mais, die einzelnen Saatreihen nicht mehr einen Reihenabstand von 75 cm, sondern von 37,5 cm aufweisen. Hierbei besteht dann das Problem, dass der kontinuierlich ausgebrachte Dünger, der in einem Düngerband in einer der Saatreihe zugeordneten Weise zugeordnet ist, von den Wurzeln des Saatkornes in seiner Gesamtheit nicht ausreichend schnell erreicht werden kann. Dies hängt damit zusammen, dass der Abstand der Saatkörner zueinander in einer Reihe durch den engeren Abstand der Saatreihen zueinander einen größeren Abstand zueinander aufweisen.

Es wird noch auf folgendes hingewiesen:
Eine Pflanze, wie Mais, Rüben, usw. braucht für eine zügige Jugendentwicklung eine bestimmte Menge Dünger. Dieser Dünger sollte in optimaler Weise im nahen Umfeld der Pflanze platziert sein, damit die noch kurzen Wurzeln der jungen Pflanze diesen Dünger schnell erreichen. Bisher ist eine Bandausbringung (so genannte Unterfußdüngung) eines kornförmigen, granulierten oder flüssigen Düngers 5 cm neben und 5 cm unter der Pflanze üblich.

Bei einer Reihenweite von 75 cm und einer Aussaatstärke von 80.000 Körnern pro Hektar stehen die Pflanzen in der Reihe 33 cm weit auseinander. Die Wurzeln müssen also ca. 18 cm lang gewachsen, um den kompletten Dünger zu erreichen. In der Praxis zeigt sich, dass diese Pflanzen in der Jugendentwicklung schlechter aufwachsen als bei einer Reihenweite von 75 cm, wo der Dünger einfach näher an der Pflanze liegt. Um dieser verzögerten Entwicklung entgegenzusteuern, wird in der Praxis die Düngermenge dementsprechend erhöht, um der Pflanze in der Jugendentwicklung genügend Nährstoffe im Nahbereich zur Verfügung zu stellen. Dieses ist jedoch unwirtschaftlich.

Der Erfindung liegt die Aufgabe zugrunde, hier in einfacher Weise derart Abhilfe zu schaffen, dass bei engeren Reihenabständen und mit einem größeren Abstand der in einer Saatreihe zueinander abgelegten Saatkörner der Dünger besser erreichbar wird und die Düngergabe jedem Saatkorn zugeordnet wird.

Diese Aufgabe wird erfindungsgemäß dadurch gelöst, dass die Düngerdosiereinrichtungen den dosierten Dünger derart den Düngerablegeeinrichtungen zuführen, dass die Düngergaben für jedes Samenkorn in portionierter Weise in Abständen zueinander jedem Samenkorn zugeordneter Weise im Boden ablegbar sind. Infolge dieser Maßnahmen wird über die Dosiereinrichtungen für den Dünger der Dünger in positionierter Weise dem jeweiligen Saatgut zugeordnet und von diesem besser erreichbar im Boden abgelegt.

Das positionierte Ablegen der jeweiligen Düngerportion in der Nähe des im Boden abgelegten Saatkornes lässt sich dadurch erreichen, dass die Düngerdosiereinrichtungen in synchronisierter Weise zu den Saatkornvereinzelungseinrichtungen mittels geeigneter Antriebsvorrichtungen und/oder Steuerungs- und/oder Regeleinrichtungen an- und/oder betreibbar sind.

Um die positionierte synchronisierte Ablage des Düngers im Hinblick auf jedes Saatkorn in einfacher Weise realisieren zu können, ist vorgesehen, dass die Düngerdosiereinrichtungen derart an- und/oder betreibbar sind, dass die Düngergaben benachbart zu dem jeweiligen Samenkorn ablegbar sind.

Der Dünger wird also nicht mehr als Band neben der Reihe ausgebracht, sondern als lokale Portion in direkter, also unmittelbarer Nähe zum vereinzelten Korn platziert. Dadurch kann im Vergleich zu Banddüngung eine Reduzierung des Düngers erfolgen und die Jugendentwicklung des Korns durch die gezielte Ablage des Korns im Nahbereich der Pflanze gefördert werden. Um jedem Saatkorn eine vorher definierte Menge Dünger zuzuordnen, wird der bisher kontinuierliche Massenstrom des Düngers in einen diskontinuierlichen Massenstrom (eine Portion Dünger pro Korns) umgewandelt.

Bei einer Verteilmaschine mit Düngerdosiereinrichtungen, die für jede Düngerablegeeinrichtung ein Dosierorgan und zumindest eine Düngerleitung aufweist, ist vorgesehen, dass jeweils zwischen dem Dosierungsorgan und der zugeordneten Düngerablegeeinrichtung jeweils eine Portioniereinrichtung angeordnet ist, dass die Portioniereinrichtung mit der Steuerungs- und/oder Regeleinrichtung verbunden und von dieser ansteuer- und/oder regelbar ist. Hierdurch lässt sich in einfacher Weise ein diskontinuierlicher Düngerstrom in erfindungsgemäßer Weise erzeugen.

Hierbei kann so vorgegangen werden, dass die Regelung der Portionierung an die Geschwindigkeit des vereinzelten Korns angepasst wird. Es wird mittels eines Sensors die Geschwindigkeit des Korns erfasst und mit der konstruktiv vorgegebenen Strecke, die es noch bis zum Boden zurücklegen muss, durch einen Bordrechner verrechnet. Mit dem daraus berechneten Zeitpunkt bis zu Ablage des Korns in dem Boden kann der Rechner das Ausbringen der vorher portionierten Menge Dünger exakt auslösen, so dass der Dünger in unmittelbarer Nähe des vereinzelten Korns im Boden abgelegt wird.

Hierbei ist in einer Ausführungsform vorgesehen, dass jeweils im Bereich der Säschare ein Sensorelement, welches mit der Steuerungs- und/oder Regeleinrichtung verbunden ist, angeordnet ist, dass aufgrund der von den Säscharen zugeordneten Sensorelementen gelieferten Daten die Steuerungs- und/oder Regeleinrichtung die Düngerportioniereinrichtung ansteuer- und/oder regelbar ist.

Hierbei ist die Düngerportioniereinrichtung als absätzig dosierendes Element ausgebildet.

Eine einfache Ausgestaltung der Düngerportioniereinrichtung lässt sich dadurch erreichen, dass die

Düngerportioniereinrichtung als Klappenventil, Magnetventil, als gegenläufig arbeitende Luftströmung, rotierendes Zellenrad mit definierten Auslauf, etc. ausgebildet ist.

### Weitere Einzelheiten der Erfindung sind der

Beispielsbeschreibung und den Zeichnungen zu entnehmen. Hierbei zeigen
Fig. 1 die kombinierte Verteilmaschine in Seitenansicht und
   Prinzipdarstellung,
Fig. 2 das Ablegen von Saatgut und Dünger bei einem
   Reihenabstand von 75 cm zueinander in herkömmlicher
   Weise in Prinzipdarstellung,
Fig. 3 das Ablegen von Saatgut und Dünger bei einem
   Reihenabstand von 75 cm zueinander in herkömmlicher
   Weise in Prinzipdarstellung und
Fig. 4 eine weitere kombinierte Verteilmaschine in
   Seitenansicht und Prinzipdarstellung.

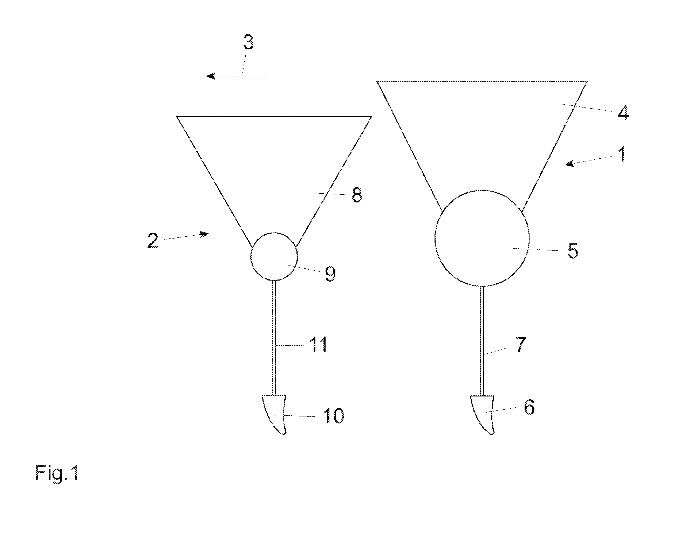

Die Fig. 1 zeigt in schematischer Weise die kombinierte Verteilmaschine, die aus der Einzelkornsämaschine 1 und der Düngerverteilmaschine 2 besteht. Die kombinierte Verteilmaschine wird in Pfeilrichtung 3 über das Feld gezogen. Die Düngerverteilmaschine 2 und die Einzelkornsämaschine 1 sind an einem nicht dargestellten Rahmen befestigt, der mit einem Ackerschlepper kuppelbar ist. Die Einzelkornsämaschine 1 weist den Vorratsbehälter 4, die Vereinzelungseinrichtung 5, die von der Vereinzelungseinrichtung 5 zu den Säscharen 6 führenden Saatgutleitungen 7 auf. Die Düngerverteilmaschine 2 weist den Vorratsbehälter 8, die Düngerdosiereinrichtungen 9 und die von den Düngerdosiereinrichtungen 9 zu den Düngerscharen 10 führenden Düngerleitungen 11 auf.

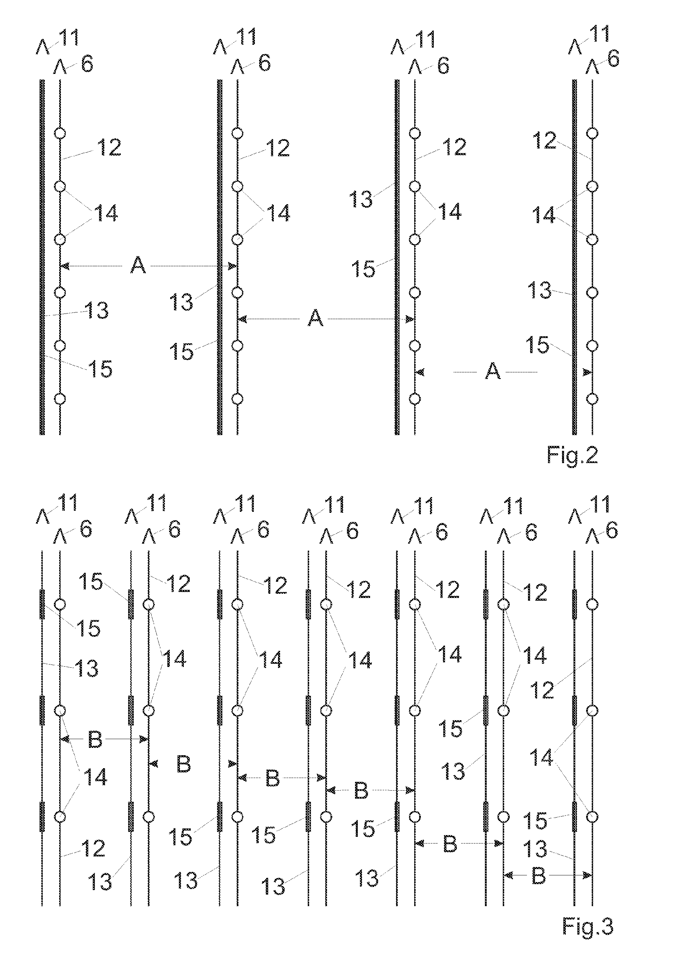

Jeweils einem Säschar 6 ist eine als Düngerschar 10 ausgebildete Düngerablageeinrichtung zugeordnet, so dass diese paarweise für jede Säreihe zueinander angeordnet sind und in benachbarten Reihen 12, 13 Saatgut 14 und Dünger 15 ablegen. In herkömmlicher Weise sind, wie die Fig. 2 zeigt, die Säschare 6 und Düngerschare 10 der einzelnen Reihen 12. 13 im Reihenabstand A von 75 cm zueinander angeordnet. Das jeweilige Düngerschar 10 ist beabstandet zu dem jeweiligen Säschar 6 angeordnet, wie die Fig. 1 und 2 zeigen.

Mittels der Düngerdosiereinrichtung 9 wird in dem von dem Düngerschar 10 in den Boden gezogenen Furche der Dünger 15 kontinuierlich bandartig fortlaufend abgelegt. Mittels des nachfolgenden Säschares 6 wird beabstandet zu der Düngerfurche eine Säfurche zur Ablage des Saatgutes 14 in den Boden von dem Säschar 6 gezogen. Über die Saatkornvereinzelungseinrichtung 5 werden die Saatkörner 14, die sich im Vorratsbehälter 4 befinden vereinzelt und in gleichmäßiger Weise über die Saatleitungen 7 dem jeweiligen Säschar 6 zugeführt, mittels welcher sie in gleichmäßigen Abständen zueinander, wie die Fig. 2 zeigt, in der Saatfurche jeder Saatreihe 12 abgelegt werden.

Wenn in erfindungsgemäßer Weise die Saatkörner 14 in Saatreihen 12, die enger beabstandet zueinander sind, abgelegt werden sollen, sind im Gegensatz zu dem Ausbringverfahren gemäß Fig. 2 gemäß Fig. 3 die einzelnen Säschare 6 und Düngerschare 10 in einem Reihenabstand B von 37,5 cm zueinander angeordnet. Hierbei werden dann, um die gleiche Anzahl von Saatkörnern 14 pro Flächeneinheit auszubringen wie gemäß Fig. 2 mit einem größeren Reihenabstand A müssen die Saatkörner 14 bei einem halbierten Reihenabstand B gemäß Fig. 3 mit dem doppelten Abstand zueinander in einer Reihe 12 abgelegt werden. Um nunmehr für die Saatkörner 14 bzw. deren durch Keimung entstehenden Wurzeln die von den Düngerscharen 14 in den Boden abgelegten Düngergaben 15 ausreichend schnell erreichbar im Boden abzulegen, wird der Dünger 15 in positionierter Weise in Abständen zueinander, wie in Fig. 3 schematisch dargestellt ist, benachbart zu jedem Saatkorn 14 im Boden abgelegt. Hierbei führen die Düngerdosiereinrichtungen 9 den dosierten Dünger derart den Düngerablegeeinrichtungen 10 zu, dass die Düngergaben 15 für jedes Saatkorn 14 in positionierter Weise in Abständen zueinander jedem Saatkorn 14 in zugeordneter Weise im Boden abgelegt sind. Hierzu werden über geeignete, beispielsweise elektronische oder mechanische Steuereinrichtungen über die Düngerdosiereinrichtung 9 oder nachgeordneten Einrichtungen der Dünger 15 positioniert und in synchronisierter Weise von den Saatkornvereinzelungseinrichtungen 5 dem Boden zugeführt. Hierbei sind die Düngerdosiereinrichtungen 9 in synchronisierter Weise zu den Saatkornvereinzelungseinrichtungen 5 mittels geeigneter Antriebseinrichtungen und/oder Steuerung- und/oder Regeleinrichtungen an- und/oder entsprechend betreibbar. Hierbei werden die Düngerdosiereinrichtungen 9 derart an-und/oder betrieben, dass die Düngergaben 15 benachbart zu dem jeweiligen Samenkorn 12 ablegbar sind, wie Fig. 3 zeigt.

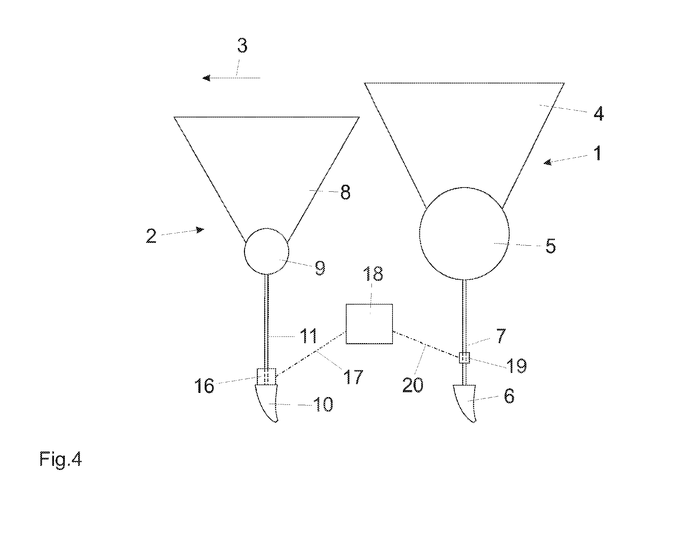

Die kombinierte Verteilmaschine gemäß Fig. 4 unterscheidet sich von der kombinierten Verteilmaschine gemäß Fig. 1 dadurch, dass das Dosierorgan der Dosiervorrichtung 9 als kontinuierlich förderndes Dosierorgan ausgebildet ist. Um dennoch den Dünger, der von dem Dosierorgan der Dosiervorrichtung 9 in die Düngerleitung 11 eingespeist wird, portionsweise in der Nähe des von dem Säschar 6 im Boden abgelegten Saatkornes entsprechend der Fig. 3 abgelegt wird, ist zwischen der Dosiervorrichtung 9 und dem Düngerschar 10 in der Düngerleitung 11 jeweils eine Portioniereinrichtung 16 angeordnet. Diese Düngerportioniereinrichtung 16 kann beispielsweise als Klappenventil, Magnetventil, als gegenläufig arbeitende Luftströmung, als rotierendes Zellenrad mit definierten Auslauf, etc. ausgebildet sein.

Die Düngerportioniereinrichtung 16 ist über eine Steuerungsleitung 17 mit dem als Steuerungs- und/oder Regeleinrichtung ausgebildeten Bordrechner 18 verbunden. In der Saatgutleitung 7 ist ein Sensorelement 19 angeordnet. Dieses Sensorelement 19 ist über eine Datenleitung 20 mit dem Bordrechner 14 verbunden. Das Sensorelement 19 erfasst jeweils das das Sensorelement 19 passierende Saatkorn. Wenn das Sensorelement 19 ein Saatkorn erfasst, so meldete es dieses über die Datenleitung 20 an dem Bordrechner 18.

Aufgrund der von dem Sensorelement 19 an dem Bordrechner 18 übermittelten Daten steuert der Bordrechner 18 die Portioniereinrichtung 16 an, so dass die Düngerportion in der Nähe des von dem Säschar sechs im Boden abgelegten Saatkorn des den Dünger platziert, wie anhand der Fig. 3 vorgeschrieben ist. Somit wird von der in absätziger Weise dosierenden Düngerportioniereinrichtung 16 die Düngerportion in der Nähe des Saatkornes im Boden abgelegt. Dies geschieht dadurch, dass aufgrund der von den Säscharen 6 zugeordneten Sensorelementen 19 gelieferten Daten der Bordrechner 18 die Düngerportioniereinrichtung 16 entsprechend ansteuert bzw. regelt.

## Patentansprüche

1. Kombinierte Verteilmaschine, bestehend aus einer Einzelkornsämaschine mit Saatkornvereinzelungsvorrichtungen und Säscharen und einer Düngerverteilmaschine mit Düngerdosiereinrichtungen und zugeordneten Düngerablageeinrichtungen, wobei die von den Saatkornvereinzelungseinrichtungen vereinzelten Samenkörner in zumindest annähernd gleichen Abständen mittels der Säschare in den Boden ablegbar sind und der von den Düngerdosiereinrichtungen dosierte Dünger über die Düngerablegeeinrichtungen zumindest in der Nähe der im Boden abgelegten Samenkörner im Boden platzierbar ist, **dadurch gekennzeichnet, dass** die Düngerdosiereinrichtungen (9) den dosierten Dünger (15) derart den Düngerablegeeinrichtungen (10) zuführen, dass die Düngergaben (15) für jedes Samenkorn (14) in portionierter Weise in Abständen zueinander jedem Samenkorn (12) zugeordneter Weise im Boden ablegbar sind.

2. Verteilmaschine nach Anspruch 1, **dadurch gekennzeichnet, dass** die Düngerdosiereinrichtungen (9) in synchronisierter Weise zu den Saatkornvereinzelungseinrichtungen (5) mittels geeigneter Antriebsvorrichtungen und/oder Steuerungs-und/oder Regeleinrichtungen an- und/oder betreibbar sind.

3. Verteilmaschine nach Anspruch 2, **dadurch gekennzeichnet, dass** die Düngerdosiereinrichtungen (9) derart an- und/oder betreibbar sind, dass die Düngergaben (15) benachbart zu dem jeweiligen Samenkorn (14) ablegbar sind.

4. Verteilmaschine nach zumindest einem der vorstehenden Ansprüche, wobei die Düngerdosiereinrichtungen für jede Düngerablegeeinrichtung ein Dosierungsorgan und zumindest eine Düngerleitung aufweist, **dadurch gekennzeichnet, dass** jeweils zwischen dem Dosieorgan (9) und der zugeordneten Düngerablegeeinrichtung (10) jeweils eine Portioniereinrichtung (16) angeordnet ist, dass die Portioniereinrichtung (16) mit der Steuerungs- und/oder Regeleinrichtung (18) verbunden und von dieser ansteuer-und/oder regelbar ist.

5. Verteilmaschine nach zumindest einem der vorstehenden Ansprüche, **dadurch gekennzeichnet, dass** jeweils im Bereich der Säschare (6) ein Sensorelement (19), welches mit der Steuerungs- und/oder Regeleinrichtung (18) verbunden ist, angeordnet ist, dass aufgrund der von den Säscharen (6) zugeordneten Sensorelementen (19) gelieferten Daten die Steuerungs- und/oder Regeleinrichtung (18) die Düngerportioniereinrichtung (16) ansteuer- und/oder regelbar ist.

6. Verteilmaschine nach einem oder mehreren der vorstehenden Ansprüche, **dadurch gekennzeichnet, dass** die Düngerportioniereinrichtung (16) als absätzig dosierendes Element ausgebildet ist.

7. Verteilmaschine nach einem oder mehreren der vorstehenden Ansprüche, **dadurch gekennzeichnet, dass** die Düngerportioniereinrichtung (16) als Klappenventil, Magnetventil, als gegenläufig arbeitende Luftströmung, rotierendes Zellenrad mit definierten Auslauf, etc. ausgebildet ist.
